# EUROPÄISCHE PATENTANMELDUNG

(11) **EP 3 187 897 A1**
(43) Veröffentlichungstag der Anmeldung: **05.07.2017**
(21) Anmeldenummer: 15203035.9
(22) Anmeldetag: 30.12.2015
(51) Int. Cl.: G01S 13/56, G01S 7/285, G01S 7/35

(54) **VERFAHREN UND VORRICHTUNG ZUR VERARBEITUNG EINES RADARSIGNALS**

(71) Anmelder: Swiss Technology Hub GmbH, 7500 St. Moritz (CH)
(72) Erfinder:
(74) Vertreter: Taruttis, Tilman

(57) **Zusammenfassung**

Die Erfindung betrifft eine Vorrichtung und ein Verfahren zur Verarbeitung eines empfangenen Dopplerradarsignals mittels einer bistabilen Kippstufe.

## Beschreibung

Die Erfindung betrifft eine Vorrichtung und ein Verfahren zur Verarbeitung eines empfangenen Radarsignals, insbesondere zur Ermittlung des Frequenzverlaufs eines empfangenen Radarsignals.

In den letzten Jahren sind integrierte und kompakte Radarsensoren zum festen Bestandteil in den Bereichen Automatisierung und Automotive geworden. Diese Bauelemente sind hauptsächlich Transceiver, welche ein elektromagnetisches Signal im Mikrowellenbereich aussenden, welches beispielsweise Frequenzen im Bereich von f = 10GHz oder 24GHz oder 72GHz umfassen kann. Je nach Betriebsart des Senders wird ein konstantes oder ein pulsorientiertes Signal ausgestrahlt, welches von bewegten oder stehenden Objekten reflektiert und vom Empfängerteil des Radarmoduls detektiert wird. Abhängig von Modell des Radarsensors werden das Sende- und das Empfängersignal in einem internen Mixer, z.B. zu einem Differenzsignal, gewandelt und an einem Ausgang des Radarsensormoduls zur weiteren Verarbeitung zur Verfügung gestellt. Je nach Sensoreinheit und dessen Betriebsart (z.B. STEREO(CW continuous wave radar oder/ und FMCW frequency modulated continuous wave radar oder/ und Impulsradar)) können hier unterschiedlichste Distanz- und / oder Winkelparameter und / oder Bewegungsinformationen von Objekten wie dessen Geschwindigkeit, Bewegungsrichtung uvm. durch Aufarbeitung und/oder Umwandlung und/oder Verarbeitung des analogen Ausgangssignals des Radarsensormoduls ermittelt werden. Das grundlegende physikalische Verfahren solcher Radaranwendungen ist das an sich bekannte Verfahren nach Christian Doppler.

Das von einem Objekt reflektierte Signal weist typischerweise nur eine geringe Energie auf. Ein Radarsensormodul, dem ein reflektiertes Signal zugeleitet wird, liefert an seinem Ausgang ein analoges elektrisches Signal, wobei der Spannungsverlauf des elektrischen Signals das empfangene reflektierte Signal widerspiegelt. Signalausgänge bekannter, insbesondere integrierter sogenannter low power- Radarsensormodule, liefern in ihrer Basiskonfiguration typischerweise nur sehr niedrige Gesamtspannungsamplituden im Bereich von +/- 150mV. Ein solches Ausgangssignal eines Radarsensormoduls, welches in einer Ausführungsform ein continuous wave -Dopplerradar-Modul sein kann, wird verstärkt, in einer Ausführungsform mit einem sogenannten Leistungsoperationsverstärker OPA (operations power amplifier) oder einem sogenannten railOPA. Das verstärkte analoge Ausgangssignal des Radarsensormoduls wird dann zur weiteren Verarbeitung einer Signalverarbeitung zugeführt.

Wird ein solches Radarsensormodul als Bewegungssensor eingesetzt, so sind die Signalverstärkung und dessen Weiterverarbeitung typischerweise unkritisch, da z.B. nur ein Schaltimpuls erzeugt wird, welcher anschließend von einer Signalverarbeitungsvorrichtung verarbeitet wird, welche gegenüber Rausch- und Störsignalen recht tolerant ist. Sollen jedoch die exakten Frequenzen oder die exakte Periodendauer des Ausgangssignals eines Radarsensormoduls bestimmt werden, wobei das Ausgangssignal ein FMCW- oder ein CW-Signal sein kann, um aus dem Ausgangssignal Informationen, wie Geschwindigkeit und/oder geographische Lage und / oder Richtung und ggf. die Bewegungsrichtung eines Objektes zu bestimmen, so sollte das Signal möglichst frei von Rausch- und Störsignalanteilen sein. Weiterhin steigt der Aufwand der Signalaufbereitung und / oder Signalverarbeitung, je nach gewünschter Empfindlichkeit und Signalauflösung um ein Vielfaches an, da hochwertige Verarbeitungselemente in der Signalverarbeitungskette verwendet werden müssen. So ist die Aufgabenstellung, das analoge Ausgangssignal des Radarsensormoduls mit dem geringen Aufwand in seiner Periodendauer möglichst präzise zu bestimmen. Hierbei gilt es insbesondere kleinste Dopplerfrequenzsignale (+/- 3mV) zur Erlangung einer hohen Empfindlichkeit, zur Bewegungsbestimmung von weit entfernten und / oder schlecht reflektierenden Objekten, zu detektieren und/oder mit klarer Abgrenzung zu den Stör- und Rauschsignalanteilen zu verarbeiten.

Diese Aufgabe wird mit einer Signalverarbeitungsvorrichtung gemäß Anspruch 1 sowie einem entsprechenden Signalverarbeitungsverfahren gelöst.

Nachfolgend wird die Erfindung anhand von Figuren näher beschrieben, wobei
- Fig. 1: eine Schaltskizze mit Funktionsblöcken der Signalverarbeitungsvorrichtung zeigt, und
- Fig. 2: einen schematischen Signalverlauf eines analogen Ausgangssignals eines Radarsensormoduls und das erzeugte Rechtecksignal zeigt.

Nachfolgend wird die Verarbeitung des analogen Ausgangssignals eines Radarsensormoduls anhand einer Geschwindigkeitsbestimmung eines bewegten Objekts beschrieben.

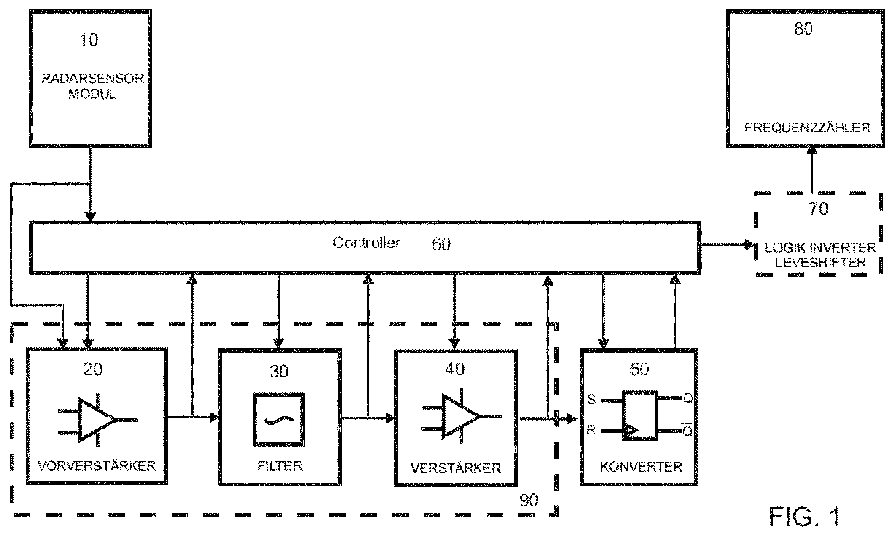

Figur 1 zeigt eine Schaltskizze einer Vorrichtung zur Verarbeitung eines analogen Ausgangssignals eines Radarsensormoduls 10 mit einem Vorverstärker 20, welcher das analoge Ausgangssignal des Radarsensormoduls 10 als Eingangssignal erhält und ein vorverstärktes analoges Ausgangssignal an ein Bandpassfilter 30 ausgibt. Das Bandpassfilter 30 filtert das vorverstärkte analoge Ausgangssignal und gibt ein gefiltertes vorverstärktes analoges Ausgangssignal an einen Verstärker 40 aus, welcher das vorverstärkte gefilterte analoge Ausgangssignal weiter verstärkt und ein verstärktes gefiltertes analoges Ausgangssignal an eine bistabile Kippstufe als Eingangssignal ausgibt. Die bistabile Kippstufe 50 erzeugt ein Rechtecksignal, welches einem Controller 60 zugeleitet wird. Der Controller 60 wertet das Rechtecksignal aus, kann eine Korrektur des Rechtecksignals durchführen und kann ein geprüftes Rechtecksignal ausgeben. Das geprüfte Rechtecksignal kann optional einem Inverter- und/oder Pegelwandler 70 zugeführt werden, welcher das geprüfte Rechtecksignal invertieren und/oder die Spannungspegel des Rechtecksignals anpassen und so ein angepasstes Rechtecksignal ausgeben kann. Das geprüfte und optional angepasste Rechtecksignal kann schließlich einem Frequenzzähler 80 als Eingangssignal zugeführt werden, welcher die Frequenz und optional weitere Signalparameter des Rechtecksignals ermittelt.

Der Vorverstärker 20 kann optional mit einer Vorverstärkerregelung verbunden sein, welche den Vorverstärkungsfaktor regelt, wobei die Vorverstärkerregelung mit dem Radarsensormodul 10 verbunden sein kann und der das analoge Ausgangssignal des Radarsensormoduls 10 zugeleitet wird, so dass die Vorverstärkerregelung basierend auf dem Pegel des analogen Ausgangssignals und dem Pegel des vom Vorverstärker erzeugten Signals den Vorverstärkungsfaktor des Vorverstärkers 20 regelt. In einer Ausführungsform kann die Vorverstärkerregelung in den Controller 60 integriert sein. Das Filter 30 kann optional mit einer Filterregelung verbunden sein, welcher das vorverstärkte analoge Ausgangssignal zugeleitet wird und welche die obere und/oder die untere Grenzfrequenz des Filters 30 einstellt. In einer Ausführungsform kann die Filterregelung in den Controller 60 integriert sein. Der Verstärker 40 kann optional mit einer Verstärkerregelung verbunden sein, welcher das gefilterte analoge Ausgangssignal zugeführt ist und welche den Verstärkungsfaktor des Verstärkers in Abhängigkeit des Pegels des gefilterten analogen Ausgangssignals und dem Pegel des vom Verstärker 40 verstärkten Signals regelt, so dass das Ausgangssignal des Verstärkers 40 außerhalb der Schwellwerte der bistabilen Kippstufe 50 liegt. In einer Ausführungsform kann die Verstärkerregelung in den Controller 60 integriert sein und mit der nachfolgend erwähnten Regelung der bistabilen Kippstufe kommunizieren. Weiterhin kann die bistabile Kippstufe mit einer Kippstufenregelung verbunden sein, welcher das verstärkte gefilterte analoge Ausgangssignal zugeführt ist und welche den oder die Schwellwerte der bistabilen Kippstufe festlegt. In einer Ausführungsform kann die Kippstufenregelung in den Controller 60 integriert sein und mit der Regelung des Verstärkers 40 kommunikativ verbunden sein.

Nachfolgend werden die Funktionen der Funktionsblöcke 20 bis 80 näher beschrieben, welche das Ausgangssignal des Radarsensormoduls 10 verarbeiten. Das Ausgangssignal eines Radarsensormoduls 10 ist dabei typischerweise das Ausgangssignal des Mixers des Radarsensormoduls, welcher ein analoges Signal des detektierten Dopplerradarsignals ausgibt. Dabei kann das analoge Ausgangssignal im symmetrischen Spannungsbereich oder nur oberhalb von 0 Volt liegen.

Das analoge Ausgangssignal des Radarsensormoduls 10 wird dem Vorverstärker 20 als Eingangssignal zugeführt und auf ein Vielfaches verstärkt, so dass ein vorverstärktes analoges Ausgangssignal erzeugt wird (z.B. Zwischenverstärkung = 1/10 Endsignalverstärkung). Diese Vorverstärkung dient dazu, das analoge Ausgangssignal soweit in seiner Amplitude so zu verstärken, dass der nachgeschaltete Filter 30 effektiv arbeiten kann. Hierzu wird vorzugsweise ein besonders rauscharmer (low noise) Operationsverstärker (operational amplifier = OPA) verwendet. Die Signalamplitude des analogen Ausgangssignals kann über einen analogen Eingang des Mikrokontrollers gemessen werden. Der Vorverstärkungsfaktor wird über die in der Software eingestellten Parameter ermittelt, um die gewünschte Ausgangssignalstärke zu erreichen, insbesondere um die Amplitude des vorverstärkten analogen Signals auf einen Wert zu heben, der für das nachfolgende Filter geeignet ist. Die dynamische Einstellung des Verstärkungsfaktors kann über den Controller 60 mit einem digitalen Potentiometer gewährleistet werden. Weiterhin kann das analoge vorverstärkte Ausgangssignal mit einer Offset-Spannung versehen werden, welche der Hälfte der maximalen Amplitude des Endverstärkungssignals entspricht, d.h. Uoffset = 1/2 x maximale Spannungsdifferenz des Verstärkerausgangssignals 40. Das Anheben des analogen vorverstärkten Ausgangssignals dient einer weiteren Signalverarbeitung im positiven Signalspannungsbereich, um symmetrische Stromversorgungen bei nachfolgenden Funktionsblöcken zu vermeiden. In einer alternativen Ausführungsform kann ein solcher Gleichspannungsanteil, d.h. eine Offset-Spannung, erst in dem Verstärker 40 aufaddiert werden.

Das Filter 30 dient zur Eliminierung unerwünschter Frequenzen aus dem analogen vorverstärkten Ausgangssignal. Typische Störquellen sind neben Versorgungsnetzeinflüssen sämtliche Sender, deren Frequenzen vom Radarsensormodul detektiert werden können.
Das Filter kann in einer Ausführungsform eine Kombination von Hi-/ Low-Filtern, insbesondere 1. und / oder 2. Ordnung oder ein Band-Pass-Filter, insbesondere 2. Ordnung sein, welches in seinen R-Komponenten der RC / CR Glieder1. und / oder 2. Ordnung und / oder RLC Filterglieder, insbesondere 2. Ordnung, über digitale Potentiometer geregelt und dynamisch auf die erforderlichen Frequenzfilterbereiche angepasst werden kann.

In der Verstärkerstufe 40 wird das vorverstärkte gefilterte analoge und optional mit einer Offset-Spannung beaufschlagte Signal vorzugsweise auf eine Amplitude verstärkt, die knapp unterhalb der Versorgungsspannung liegt, so dass Clipping-Effekte vermieden werden.

Sofern noch nicht erfolgt, kann in einer Ausführungsform eine Offset-Spannung addiert werden, so dass das verstärkte gefilterte Signal des Verstärkers 40 immer größer als 0 Volt ist.

Zur Einstellung des Verstärkungsfaktors kann der Verstärker mit einer Verstärkungsregelung, in einer Ausführungsform dem Controller 60, verbunden sein, welcher die Amplitude des dem Verstärker zugeführten Signals sowie die vom Verstärker 40 ausgegebene Signalamplitude ermittelt und den Verstärkungsfaktor so anpasst, dass oben erwähnte Amplitude ausgegeben wird.

Der Vorverstärker 20 sowie das Filter 30 und der Verstärker 40 bilden zusammen eine Signalaufbereitungsstufe 90, welche das analoge Ausgangssignal des Radarsensormoduls so aufbereitet, dass es möglichst rausch- und störimpulsfrei und mit einem Signalpegel der nachfolgend beschriebenen bistabilen Kippstufe bereitgestellt wird, dass die Amplitude des signalaufbereiteten Signals die Schwellwerte der bistabilen Kippstufe über- bzw. unterschreitet und ein Rechtecksignal erzeugt wird. In einer alternativen Ausführungsform und in Abhängigkeit der Güte der verwendeten Funktionsblöcke weist die Signalaufbereitungsstufe mindestens jedenfalls entweder den Vorverstärker 20 oder den Verstärker 40 auf, wobei der jeweils andere Verstärker entfallen kann.

Das verstärkte gefilterte analoge Ausgangssignal des Verstärkers 40 wird einer bistabilen Kippstufe 50 zugeführt, welche, basierend auf dem zugeführten verstärkten gefilterten analogen Ausgangssignal, ein Rechtecksignal erzeugt. Die bistabile Kippstufe kann in einer Ausführungsform ein Flipflop oder ein Komparator oder ein Schmitt-Trigger sein, welche jeweils optional in ihren Schwellwerten regelbar sind.

Die bistabile Kippstufe 50 kann mit einer Kippstufenregelung verbunden sein, welcher das verstärkte gefilterte analoge Ausgangssignal zugeführt wird. Vorzugsweise ermittelt die Kippstufenregelung die obere und untere Spannung desjenigen Grundrauschens, welches ohne Nutzsignal jedoch mit Offsetspannung anliegt und legt die Schwellwertspannungen der bistabilen Kippstufe auf einen Wert wenig über bzw. unterhalb der ermittelten minimalen bzw. maximalen Spannung des Grundrauschens fest. Die bistabile Kippstufe schaltet folglich erst dann, wenn der Spannungspegel die so ermittelten Schwellwerte unter- bzw. überschreitet. Der Wert der Offsetspannung ist dabei wie eine Nulldurchgangslinie zu betrachten.

Unabhängig von der Amplitude des verstärkten gefilterten analogen Ausgangssignals, welches der bistabilen Kippstufe als Eingangssignal zugeführt ist, erzeugt die bistabile Kippstufe ein Rechtecksignal mit voreingestellter Amplitude. Die Flanken des Rechtecksignals spiegeln die Nulldurchgänge des analogen Ausgangssignals des Radarsensormoduls wider.

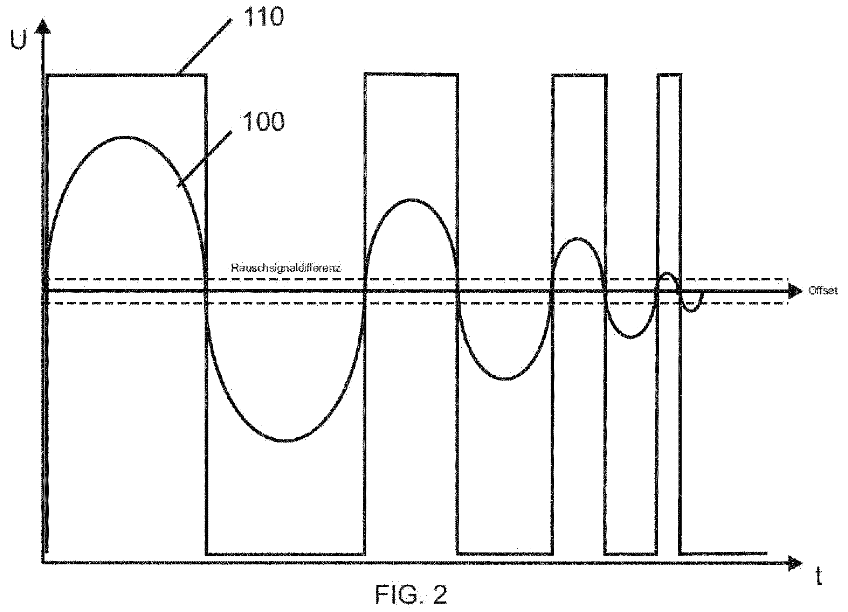

Figur 2 zeigt eine schematische Darstellung eines Signalverlaufs des analogen Ausgangssignals 100 des Radarsensormoduls 10 sowie das darauf basierend erzeugte Rechtecksignal 110. Die obere und untere Schwellwertspannung der bistabilen Kippstufe sind mit 120 bzw. 130 bezeichnet. Der beispielhaft dargestellte Signalverlauf mit abnehmender Amplitude bei steigender Frequenz kann von einem sich gegenüber dem Radarsensormodul beschleunigenden und sich entfernenden Objekt, etwa einem KFZ, erzeugt werden.

Das Rechtecksignal ist damit ein digitales Signal, welches dem Controller 60 als digitales Eingangssignal zugeführt wird. Der Controller 60 tastet das anliegende Rechtecksignal nach dem Nyquist-Kriterium in an sich bekannter Weise ab und ermittelt die Periodendauer bzw. die Frequenz eines jeden einzelnen Rechteckimpulses. Der Controller 60 ermittelt dazu den zeitlichen Abstand zweier aufeinander folgender Signalflanken des Rechtecksignals. Dieser zeitliche Abstand ist die halbe Periodendauer einer Schwingung, sodass die Frequenz eines jeden Rechteckimpulses jeweils als Kehrwert des doppelten zeitlichen Abstandes ermittelt wird. Auf diese Weise ermittelt der Controller 60 den Frequenzverlauf des analogen Ausgangssignals des Radarsensormoduls über die Messzeit. Die ermittelten Frequenzwerte speichert der Controller zur weiteren Verarbeitung ab. Der Controller verwendet damit keines der herkömmlichen mathematisch aufwändigen Verfahren wie z.B. FFT oder DFT oder DCT zur Ermittlung der Frequenzen und ermöglicht die Ermittlung der Frequenz für jeden Rechteckimpuls, welcher einer Halbwelle entspricht.

Der Controller 60 führt weiterhin eine Plausibilitätsprüfung durch. Dazu ermittelt der Controller 60 die Standardabweichung der ermittelten Frequenzen für einen Zeitabschnitt in einem vorgegebenen Spektrum und prüft, ob die ermittelten Frequenzen innerhalb dieses Zeitabschnitts in der Standardabweichung für diesen Abschnitt liegen. Wird eine Frequenz ermittelt, die außerhalb der für den Zeitabschnitt ermittelten Standardabweichung liegt, so wird dieser Frequenzwert als fehlerhaft erkannt und aus dem Zeitabschnitt gelöscht.

Der Controller 60 kann die auf diese Weise für jeden Zeitabschnitt ermittelten Frequenzwerte zur weiteren Verarbeitung weitergeben. Optional kann der Controller 60 zur Erzeugung eines pulsweitenmodulierten Signals einen entsprechenden PWM-Generator aufweisen und diesen, basierend auf den ermittelten Frequenzwerten, ansteuern, so dass der Controller ein bereinigtes Rechtecksignal erzeugt und ausgibt, welches den bereinigten Frequenzverlauf des analogen Ausgangssignals des Radarsensormoduls widergibt.

Dieses erzeugte Signal kann einer an sich bekannten Frequenzzählereinheit 80 zur weiteren Verarbeitung zugeführt werden, welche wiederum die Frequenzen ermittelt. Diese weitere Verarbeitung kann optional einen Inverter und/oder Pegelwandler 70 umfassen.

## Patentansprüche

1. Vorrichtung zur Ermittlung eines Frequenzverlaufs eines Ausgangssignals eines Radarsensormoduls umfassend
eine Signalaufbereitungsstufe (90) mit mindestens einer Verstärkerstufe und einem Filter zur Aufbereitung des Ausgangssignals, sodass ein signalaufbereitetes Ausgangssignal erzeugt wird, und
eine bistabile Kippstufe zur Erzeugung eines Rechtecksignals basierend auf dem signalaufbereiteten Ausgangssignal, und
einen Controller (60) zur Ermittlung der Frequenz eines jeden Rechteckimpulses des Rechtecksignals.

2. Vorrichtung nach Anspruch 1, wobei die Signalaufbereitungsstufe (90) einen Bandpassfilter (30) aufweist.

3. Vorrichtung nach Anspruch 2, wobei die Signalaufbereitungsstufe einen Vorverstärker (20) zur Vorverstärkung des empfangenen Radarsignals und den Bandpassfilter (30) zur Filterung des vorverstärkten Ausgangssignals und einen Verstärker (40) zur Verstärkung des gefilterten vorverstärkten Ausgangssignals umfasst.

4. Vorrichtung nach Anspruch 3, weiterhin umfassend eine Vorverstärkerregelung zur Regelung des Vorverstärkungsfaktors der Vorverstärkers (20).

5. Vorrichtung nach Anspruch 4, wobei die Vorverstärkerregelung in den Controller (60) integriert ist.

6. Vorrichtung nach einem der Ansprüche 2-5, weiterhin umfassend eine Filterregelung zur Regelung des Bandpassfilters (30).

7. Vorrichtung nach Anspruch 6, wobei die Filterregelung in den Controller 60 integriert ist.

8. Vorrichtung nach einem der Ansprüche 3-7, weiterhin umfassend eine Verstärkerregelung zur Regelung des Verstärkungsfaktors des Verstärkers (40).

9. Vorrichtung nach Anspruch 8, wobei die Verstärkerregelung in den Controller (60) integriert ist.

10. Vorrichtung nach einem der vorstehenden Ansprüche, weiterhin umfassend eine Kippstufenregelung zur Regelung der bistabilen Kippstufe (50).

11. Vorrichtung nach einem der vorstehenden Ansprüche, wobei der Controller (60) eingerichtet ist zur
- Ermittlung der Standardabweichung der Frequenzen innerhalb eines vorgegebenen Spektrums und für einen Zeitabschnitt und zum
- Löschen von Frequenzwerten, welche außerhalb der Standardabweichung für den Zeitabschnitt liegen.

12. Verfahren zur Ermittlung eines Frequenzverlaufs eines Ausgangssignals eines Radarsensormoduls umfassend
- Aufbereiten des Ausgangssignals mittels einer Signalaufbereitungsstufe (90) mit mindestens einem Filter, so dass ein signalaufbereitetes Ausgangssignal erzeugt wird, und
- Aufbereiten des Ausgangssignals mittels einer Signalaufbereitungsstufe (90) mit mindestens einem Filter, so dass ein signalaufbereitetes Ausgangssignal erzeugt wird, und
- Ermitteln der Frequenz eines jeden Rechteckimpulses des Rechtecksignals mittels eines Controllers (60).

13. Verfahren nach Anspruch 12, weiterhin umfassend
- Ermitteln der Standardabweichung der Frequenzwerte für einen Zeitabschnitt und innerhalb eines vorgegebenen Spektrums, und
- Löschen eines Frequenzwertes, falls dieser außerhalb der Standardabweichung des Zeitabschnitts liegt.

14. Verfahren nach einem der vorstehenden Ansprüche 12-13, wobei die Signalaufbereitungsstufe einen Bandpassfilter (30) und eine Verstärkerstufe aufweist, weiterhin umfassend mindestens einen der nachfolgenden Verfahrensschritte
- Regeln der Verstärkerstufe und/oder Regeln des Bandpassfilters.
